# EUROPEAN PATENT APPLICATION

(11) **EP 2 099 140 A1**
(43) Date of publication of application: **09.09.2009**
(21) Application number: 08290214.9
(22) Date of filing: 04.03.2008
(51) Int. Cl.: H04B 7/06, H04L 1/00

(54) **Base station link adaptation method**

(71) Applicant: Alcatel Lucent, 75008 Paris (FR)
(72) Inventor: Chen, Yejian, 70191 Stuttgart (DE); Cesar, Bozo, 70439 Stuttgart (DE); Woysch, Gunter, 70435 Stuttgart (DE)
(74) Representative: Schmidt, Werner Karl

(57) **Abstract**

The invention relates to a method of selecting link adaptation characteristics in a base station of an OFDM mobile digital communication system, the base station being coupled to at least one mobile station, the method comprising the steps of: measuring a mobile station's velocity in the mobile station; receiving a mobile station's velocity value from the mobile station by the base station; calculating a channel estimation and equalization with a first algorithm by the base station, if the mobile station's velocity value is smaller than a first threshold; activating a MIMO Matrix B and activating an AMC permutation mode by the base station, if the mobile station's velocity value is smaller than the first threshold, and if the mobile station occupies multiple antennas; activating a beamforming algorithm and activating the AMC permutation mode by the base station, if the mobile station's velocity value is smaller than the first threshold, and if the mobile station does not occupy multiple antennas. The method further comprises the steps of: activating a RX/TX diversity algorithm and activating a PUSC permutation mode by the base station, if the mobile station's velocity value is bigger than the first threshold, and if the mobile station does not occupy multiple antennas; activating the MIMO Matrix B and activating the PUSC permutation mode by the base station, if the mobile station's velocity value is bigger than the first threshold, if the mobile station occupies multiple antennas, and if the mobile station's velocity value is smaller than a second threshold; activating a MIMO Matrix A and activating the PUSC permutation mode by the base station, if the mobile station's velocity value is bigger than the first threshold, if the mobile station occupies multiple antennas, and if the mobile station's velocity value is bigger than the second threshold.

## Description

### Technical field

The invention relates to a method of link adaptation in a base station and to a computer program product.

### Background and related art

Link adaptation, or adaptive modulation and coding (AMC), denotes the selection of the modulation, coding and other signal and protocol parameters according to the conditions on the radio link. The conditions may be related to the interference due signals coming from other transmitters, the sensitivity of the receiver, or the available transmitter power margin. Wireless communication standards as e.g. WiMax and LTE use a rate adaptation algorithm that adapts the modulation and coding scheme (MCS) according to the quality of the radio channel, and thus the bit rate and robustness of data transmission. The process of link adaptation is dynamic and the signal and protocol parameters change as the radio link conditions.

Adaptive modulation systems require channel information at the transmitter. This could be acquired, for example, by assuming that the channel from the transmitter to the receiver is approximately the same as the channel from the receiver to the transmitter. Alternatively, the channel information can also be directly measured at the receiver, and sent back to the transmitter. Adaptive modulation systems improve rate of transmission, and bit error rates, by exploiting the channel information that is present at the transmitter. Especially over fading channels which model wireless propagation environments, adaptive modulation systems shows great performance enhancements compared to systems that do not exploit channel knowledge at the transmitter.

There is therefore a need for an improved method of selecting the link adaptation characteristics in a base station, to a base station and to a computer program product to perform the method in accordance with the invention.

### Summary

The invention relates to a method of selecting link adaptation characteristics in a base station of an OFDM mobile digital communication, the base station being coupled to at least one mobile station, the method comprising the steps of: measuring a mobile station's velocity in the mobile station; receiving a mobile station's velocity value from the mobile station by the base station; calculating a channel estimation and equalization with a first algorithm by the base station, if the mobile station's velocity value is smaller than a first threshold; activating a MIMO Matrix B including spatial multiplexing and activating an AMC permutation mode by the base station, if the mobile station's velocity value is smaller than the first threshold, and if the mobile station occupies multiple antennas; activating a beamforming algorithm and activating the AMC permutation mode by the base station, if the mobile station's velocity value is smaller than the first threshold, and if the mobile station does not occupy multiple antennas.

The method further comprises the steps of: activating a RX/TX diversity algorithm and activating a PUSC permutation mode by the base station, if the mobile station's velocity value is bigger than the first threshold, and if the mobile station does not occupy multiple antennas; activating the MIMO Matrix B including spatial multiplexing and activating the PUSC permutation mode by the base station, if the mobile station's velocity value is bigger than the first threshold, if the mobile station occupies multiple antennas, and if the mobile station's velocity value is smaller than a second threshold; activating a MIMO Matrix A including space time block coding and activating the PUSC permutation mode by the base station, if the mobile station's velocity value is bigger than the first threshold, if the mobile station occupies multiple antennas, and if the mobile station's velocity value is bigger than the second threshold.

The main advantage of the embodiments is that the velocity of the mobile station's is measured by the base station, the value of the measurement is sent to the base station and therefore available immediate for further processing. This may include estimating the right channel estimation and equalization algorithms, the permutation mode to use, or the suitable MIMO matrix. In contrast to all other measurements, as e.g. the CINR variance, require several frame lengths in calculations before they are available as an input.

In accordance with an embodiment, the method further comprises the steps of: calculating the channel estimation and equalization using a second algorithm by the base station, if the mobile station's velocity value is bigger than the first threshold and if the mobile station's velocity value is smaller than the second threshold, wherein the second algorithm provides more accurate channel estimation for this velocity range than the first algorithm, wherein the second threshold is bigger than the first threshold; calculating the channel estimation and equalization using a third algorithm by the base station, if the mobile station's velocity value is bigger than the second threshold, and if the mobile station's velocity value is smaller than a third threshold, wherein the third algorithm provides more accurate channel estimation for this velocity range than the second algorithm, wherein the third threshold is bigger than the second threshold; and calculating the channel estimation and equalization using a fourth algorithm by the base station, if the mobile station's velocity value is bigger than the third threshold, wherein the fourth algorithm provides more accurate channel estimation for this velocity range than the third algorithm. The main advantage of the embodiments is that different algorithms are proposed according to the velocity range of the mobile station, each one of the algorithms providing the most accurate channel estimation for that velocity range.

In accordance with further embodiments, the mobile station's velocity value is sent through an extended fast feedback channel, as e.g. the Channel Quality Indicator Channel (CQICH), to the base station. Alternatively, the mobile station's velocity value is sent with a MAC management message to the base station.

The method as in any of the preceding embodiments, wherein the mobile station's velocity is measured with a Global Positioning System (e.g. GPS, Galileo, Glonass) or motion detection sensors located in the mobile station.

In another aspect, the invention relates to a base station in an OFDM mobile digital communication, the base station coupled to at least one mobile station, the base station comprising: means for receiving a mobile station's velocity value measured by the mobile station; means for calculating a channel estimation and equalization with a first algorithm, if the mobile station's velocity value is smaller than a first threshold; means for activating a MIMO Matrix B including spatial multiplexing and activating an AMC permutation mode, if the mobile station's velocity value is smaller than the first threshold, and if the mobile station occupies multiple antennas; and means for activating a beamforming algorithm and activating the AMC permutation mode, if the mobile station's velocity value is smaller than the first threshold, and if the mobile station does not occupy multiple antennas.

The base station further comprises means for activating a RX/TX diversity algorithm and activating a PUSC permutation mode, if the mobile station's velocity value is bigger than the first threshold, and if the mobile station does not occupy multiple antennas; means for activating the MIMO Matrix B including spatial multiplexing and activating the PUSC permutation mode, if the mobile station's velocity value is bigger than the first threshold, if the mobile station occupies multiple antennas, and if the mobile station's velocity value is smaller than a second threshold; means for activating a MIMO Matrix A including space time block coding and activating the PUSC permutation mode, if the mobile station's velocity value is bigger than the first threshold, if the mobile station occupies multiple antennas, and if the mobile station's velocity value is bigger than the second threshold.

The base station of the embodiments further comprises: means for calculating the channel estimation and equalization using a second algorithm, if the mobile station's velocity value is bigger than the first threshold and if the mobile station's velocity value is smaller than the second threshold, wherein the second algorithm provides more accurate channel estimation for this velocity range than the first algorithm, wherein the second threshold is bigger than the first threshold.

The base station of the embodiments, wherein the mobile station's velocity value is sent with an extended fast feedback channel.

In another aspect, the invention relates to a computer program product stored on a computer usable medium, comprising computer readable program means for causing a computer to perform a method according to any of the embodiments when the program is run on the computer.

### Brief description of the drawings

In the following preferred embodiments of the invention will be described in greater detail by way of example only making reference to the drawings in which:
- Figure 1: shows an example of a method of link adaptation in a base station,
- Figure 2: shows a second flow diagram of a channel estimation calculation,
- Figure 3: shows a third flowchart of the selection of the burst profile selection,
- Figure 4: shows a fourth flowchart of the selection of the burst profile selection,
- Figure 5: depicts a wireless communication system according to an embodiment.

### Detailed description

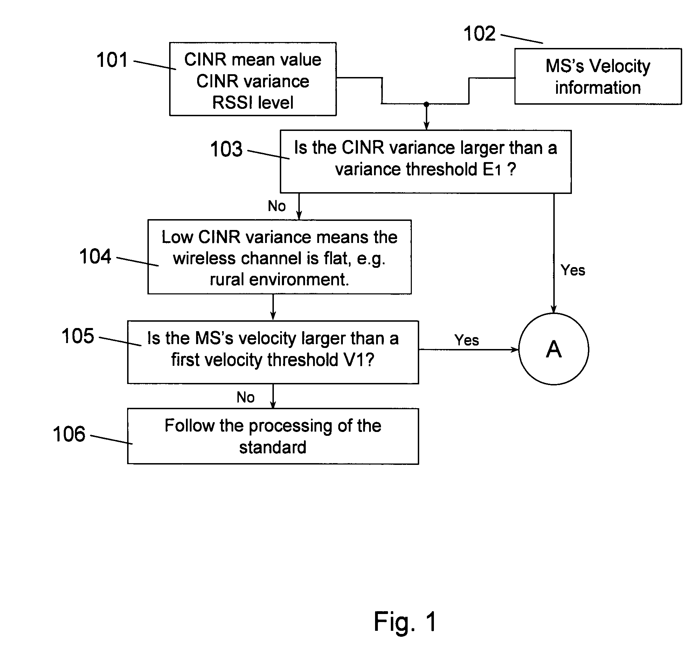

Fig. 1 shows an example of the link adaptation process in a base station comprising a first step 101 where measurements are carried out including the carrier to interference plus noise ratio (CINR), the received signal strength indication (RSSI). Parallel to the first step 101, a second step 102 receives the mobile station's velocity information. The mobile station velocity information may be measured using a Global Positioning System (e.g. GPS, Galileo or Glonass), or motion detection sensors located in the mobile station. In the third step 103, the CINR variance is compared with the variant threshold E1. If the CINR variance is not larger than the variance threshold, it indicates 104 that the wireless channel is flat and may be for example located in a rural environment.

After the step 103, in a further step 105, the mobile station velocity is compared with a first velocity threshold V1, and if the velocity is smaller than the velocity threshold, then a normal communication is carrier out between the mobile and the base station. On the other hand, if the variance or the velocity are bigger that its respective thresholds, the algorithm uses a specific channel estimation calculation using the mobile station's velocity and specific burst profile characteristics. This calculation is described in the subsequent figures.

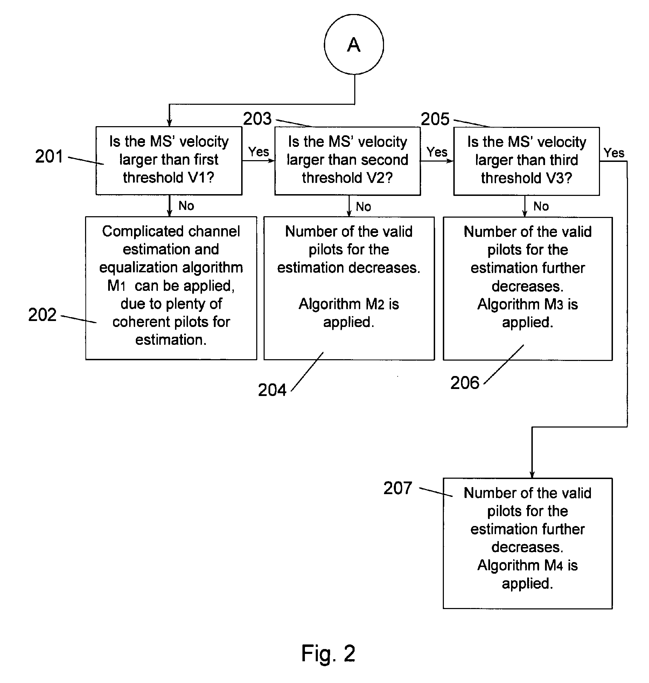

Fig. 2 shows a flow diagram 200 of a calculation for the channel estimation and equalization according to different ranges of velocity thresholds. This calculation may be a subsequent development of the calculated CINR variance as described in Fig. 1. On the first step 201, the mobile station's velocity is compared with a first threshold V1. If the velocity is smaller than the first threshold, the step 202 uses a complicated channel estimation and equalization algorithm M₁. On the other hand, if the mobile station's velocity is larger than the first threshold, the step 203 compares this mobile station's velocity with a second threshold V2. This second threshold is bigger than the first threshold. If the mobile station's velocity is smaller than the threshold then it indicates that the number of the valid pilots for the estimation decreases and a second algorithm M₂ is applied in the step 204. This second algorithm M₂ provides more accurate channel estimation for this velocity range than the first algorithm M₁.

If the mobile station's velocity is larger than the second threshold, the step 205 compares the mobile station's velocity with a third threshold V3. If the mobile station's velocity is smaller than the third threshold, then it indicates that the number of the valid pilots for estimation is even smaller and a third channel estimation and equalization algorithm M₃ is applied. This third algorithm M₃ provides more accurate channel estimation for this velocity range than the second algorithm M₂. If the mobile station's velocity is larger than the third threshold then, in the step 207, a fourth algorithm M₄ is applied and the number of valid pilots for estimation is even smaller than the rest of the steps of the calculation. This fourth algorithm M₄ uses fewer resources than M₃ and it is ideal for the fastest varying channels.

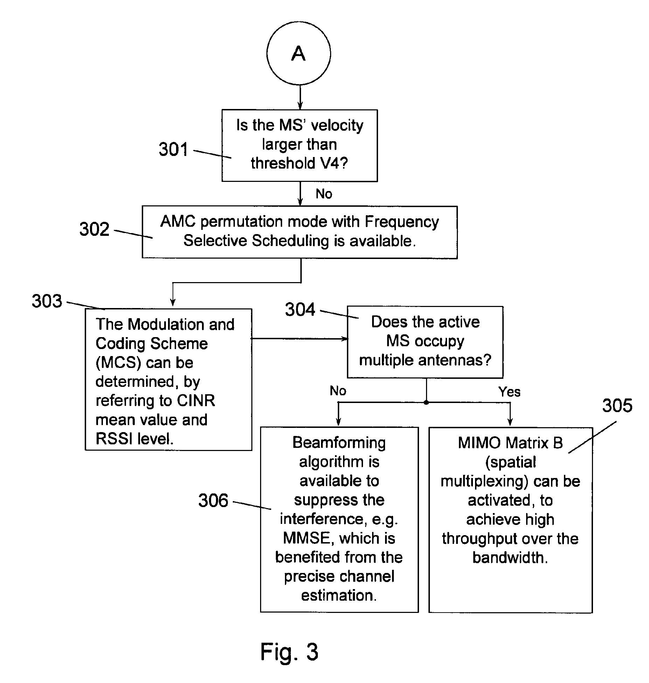

Fig. 3 shows a third flow diagram for the method after selecting the burst profile in AMC permutation mode. On the first step 301 the mobile station's mobility is compared with a first threshold V4. If the mobile station's velocity is smaller than the first threshold, then step 302 applies an AMC permutation mode with frequency selective scheduling. In this case, the third step 303, the modulation and coding scheme (MCS) can be determined by considering the velocity, CINR mean values and the RSSI level. The modulation scheme can be represented as a mapping between the coded information bits and the complex symbols. For example, the 2, 4 and 6 (or more) coded information bits are mapped to a complex symbol in QPSK, 16QAM and 64QAM (or higher) scheme, respectively. The symbol rate will be higher than the input bit rate, thus modulation directly increase the data rate.

The coding introduces redundancy to protect the original information bits, combating fading, noise and interference. The more redundancy, the better are the information bits protected. Due to the coding, the bit rate after coding is always lower. Modulation and coding are trade-off schemes. They depend on multi-dimensional aspects, such as fading, noise, interference and the signal power. Some of these aspects, as e.g. fading, are strongly influenced by the MS's velocity. It is then possible to use the velocity information as a reference to adaptively choose the best modulation and coding schemes.

On a fourth step 304 of fig. 3, an indication is requested 304 in order to know if the active mobile station occupies multiple antennas. If the active mobile station occupies only single antenna, then the beamforming technique is available. Otherwise, the MIMO technique is available. The condition in the embodiments can thus determine, whether the mobile station supports MIMO or not. In the case that the active mobile stations do not occupy multiple antennas, a sixth step 306 uses a beamforming algorithm in order to suppress the interference that may occur from the MMSE that is benefited from the channel estimation. Beamforming is possible if the distance between the antenna elements is half-wavelength of the carrier frequency, so that the received signal of the BS antenna elements can be regarded as correlated signals. The base station gets the user location via Direction of Arrival (DoA) estimation, and places a beam to coherently collect the signal components. MMSE is an abbreviation of Minimum Mean Square Error. MMSE is an algorithm for receivers with multiple antennas that adaptively minimizes the mean square value of the error.

In a continuation of the burst profile selection of fig. 3, if the indication of the active mobile station occupying multiple antennas is affirmative, a multiple input/multiple output (MIMO) matrix B with a spatial multiplexing can be activated in order to achieve high throughput over the bandwidth.

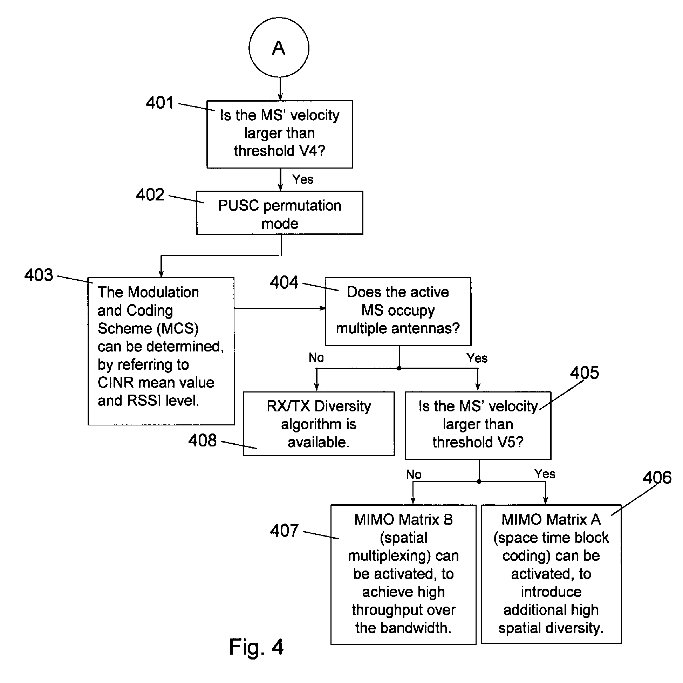

Fig. 4 shows a fourth flowchart of the selection of the burst profile in PUSC permutations. In a first step 401, the mobile station's velocity is compared with a first threshold V4. If the mobile station velocity is larger than the threshold then a PUSC permutation mode in step 402 is used. On the third step 403, the modulation and coding scheme (MCS) can be determined by using the measurements of the velocity, CINR mean values and the RSSI levels. On the fourth step 404 it is required to obtain information of the active mobile station using multiple antennas. If the information is affirmative, the fifth step 405 compares the mobile station's velocity with a second threshold V5. This second threshold is bigger than the first threshold.

If the mobile station's velocity is larger than the second threshold, then a sixth step 406 activates a multiple input and multiple output (MIMO) matrix A. The matrix A comprises space time block coding in order to introduce additional high spatial diversity. In the wireless communications as e.g. the WiMAX standard, matrix A is equivalent with Space-Time Block Coding (STBC). It is a one-stream MIMO scheme. The original signal is encoded according to the code matrix (Matrix A), and transmitted via multiple antennas. At the receiver, the spatial redundancy can improve the detection and recover the signal.

If the mobile station's velocity is smaller than the second threshold, then a seventh step 407 uses a MIMO matrix B with spatial multiplexing in order to achieve high throughput over the bandwidth. Matrix B is equivalent with Spatial Multiplexing (SM). It is a multi-stream MIMO scheme. The streams are encoded according to the code matrix (Matrix B), and transmitted via multiple antennas. This scheme has high data rate. The Matrix A and the Matrix B depends on criteria to perform the MIMO switch and in the embodiments, the mobile station's velocity is a key factor. Finally, if the mobile station does not occupy multiple antennas, then an eighth step 408 makes available a reception and transmission diversity algorithm.

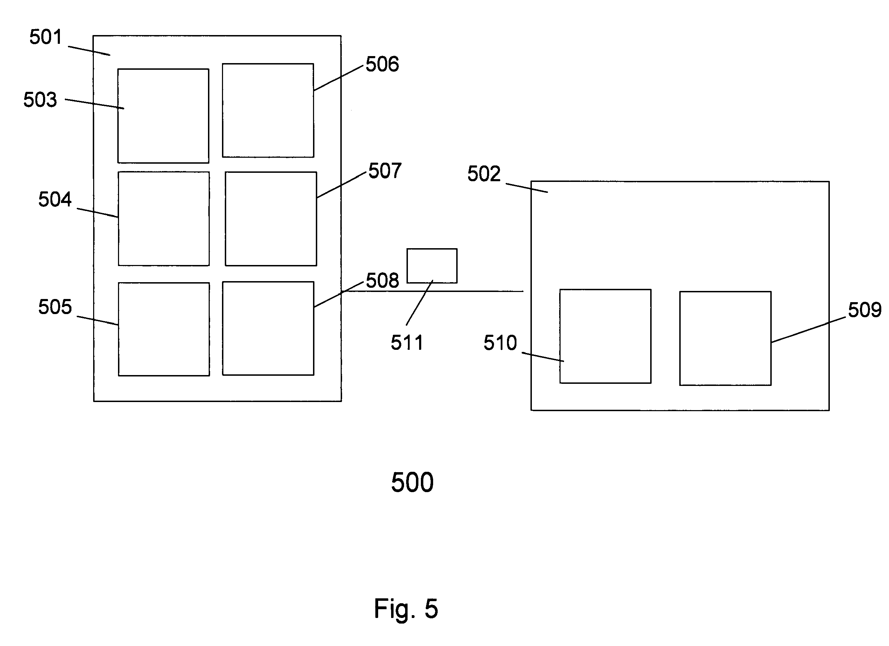

Fig. 5 depicts a wireless communication system 500 comprising a base station 501 coupled to a mobile station 502. The mobile station comprising means for 509 measuring the mobile station's velocity and means for 510 transmitting the mobile station's velocity value 511 to the base station 501. The base station 501 comprises: means for receiving 503 a mobile station's velocity value measured by the mobile station; means for calculating 504 a channel estimation and equalization with a first algorithm, if the mobile station's velocity value is smaller than a first threshold; - means for activating 505 a MIMO Matrix B including spatial multiplexing and activating an AMC permutation mode, if the mobile station's velocity value is smaller than the first threshold, and if the mobile station occupies multiple antennas; and means for activating 506 a beamforming algorithm and activating the AMC permutation mode, if the mobile station's velocity value is smaller than the first threshold, and if the mobile station does not occupy multiple antennas.

The base station 501 further comprises means for activating 507 a RX/TX diversity algorithm and activating a PUSC permutation mode, if the mobile station's velocity value is bigger than the first threshold, and if the mobile station does not occupy multiple antennas; means for activating 508 the MIMO Matrix B including spatial multiplexing and activating the PUSC permutation mode, if the mobile station's velocity value is bigger than the first threshold, if the mobile station occupies multiple antennas, and if the mobile station's velocity value is smaller than a second threshold; and means for activating 509 a MIMO Matrix A including space time block coding and activating the PUSC permutation mode, if the mobile station's velocity value is bigger than the first threshold, if the mobile station uses a, if the mobile station occupies multiple antennas, and if the mobile station's velocity value is bigger than the second threshold.

### List of Reference Numerals

| | |
|---|---|
| 101 | First step |
| 102 | Second step |
| 103 | Comparison step |
| 104 | Indication step |
| 105 | Comparison step |
| 106 | Standards step |
| 201 | Comparison step |
| 202 | First calculation step |
| 203 | Comparison step |
| 204 | Second calculation step |
| 205 | Comparison step |
| 206 | Third calculation step |
| 207 | Fourth calculation step |
| 301 | Comparison step |
| 302 | Permutation mode step |
| 303 | MCS step |
| 304 | Comparison step |
| 305 | MIMO Matrix B step |
| 306 | Beamforming step |
| 401 | Comparison step |
| 402 | PUSC step |
| 403 | MCS step |
| 404 | Multiple antennas step |
| 405 | Comparison step |
| 406 | MIMO Matrix A step |
| 407 | MIMO Matrix B step |
| 501 | Base station |
| 502 | Mobile station |
| 503 | Means for receiving |
| 504 | Means for calculating |
| 505 | Means for activating |
| 506 | Means for activating |
| 507 | Means for activating |
| 508 | Means for activating |
| 509 | Means for activating |
| 511 | Mobile station's velocity value |

## Claims

1. A method of selecting link adaptation characteristics in a base station of an OFDM mobile digital communication system, said base station being coupled to at least a mobile station, said method comprising the steps of:
- measuring (201) a mobile station's velocity in said mobile station;
- receiving a mobile station's velocity value from said mobile station by said base station;
- calculating (202) a channel estimation and equalization with a first algorithm by said base station, if said mobile station's velocity value is smaller than a first threshold;
- activating (305) a MIMO Matrix B including spatial multiplexing and activating an AMC permutation mode (302) by said base station, if said mobile station's velocity value is smaller than said first threshold, and if said mobile station occupies multiple antennas;
- activating (306) a beamforming algorithm and activating said AMC permutation mode (302) by said base station, if said mobile station's velocity value is smaller than said first threshold, and if said mobile station does not occupy multiple antennas;
- activating (408) a RX/TX diversity algorithm and activating a PUSC permutation mode 402 by said base station, if said mobile station's velocity value is bigger than said first threshold, and if said mobile station does not occupy multiple antennas;
- activating said MIMO Matrix B (407) including spatial multiplexing and activating said PUSC permutation mode (402) by said base station, if said mobile station's velocity value is bigger than said first threshold, if said mobile station occupies multiple antennas, and if said mobile station's velocity value is smaller than a second threshold;
- activating a MIMO Matrix A (406) including space time block coding and activating said PUSC permutation mode (402) by said base station, if said mobile station's velocity value is bigger than said first threshold, if said mobile station occupies multiple antennas, and if said mobile station's velocity value is bigger than said second threshold.

2. The method as in claim 1 further comprises the steps of:
- calculating (204) said channel estimation and equalization using a second algorithm by said base station, if said mobile station's velocity value is bigger than said first threshold and if said mobile station's velocity value is smaller than said second threshold, wherein said second algorithm provides more accurate channel estimation for a velocity range between said first threshold and said second threshold than said first algorithm, wherein said second threshold is bigger than said first threshold;
- calculating (206) said channel estimation and equalization using a third algorithm by said base station, if said mobile station's velocity value is bigger than said second threshold, and if said mobile station's velocity value is smaller than a third threshold, wherein said third algorithm provides more accurate channel estimation for a velocity range between said second threshold and said third threshold than said second algorithm, wherein said third threshold is bigger than said second threshold;
- calculating (207) said channel estimation and equalization using a fourth algorithm by said base station, if said mobile station's velocity value is bigger than said third threshold, wherein said fourth algorithm provides more accurate channel estimation for a velocity bigger than said third threshold than said third algorithm.

3. The method as in claim 1 and 2, wherein said mobile station's velocity value is sent with an extended fast feedback channel, wherein said feedback channel is Channel Quality Indicator Channel.

4. The method as in claim 1 and 2, wherein said mobile station's velocity value is sent with a MAC management message.

5. The method as in any of the preceding claims, wherein said mobile station's velocity is measured with a Global Positioning System or motion detection sensors located in said mobile station.

6. A base station (501) in an OFDM mobile digital communication system (500), said base station (501) coupled to at least a mobile station (502), said base station (501) comprising:
- means for receiving (503) a mobile station's velocity value measured by said mobile station;
- means for calculating (504) a channel estimation and equalization with a first algorithm, if said mobile station's velocity value is smaller than a first threshold;
- means for activating (505) a MIMO Matrix B including spatial multiplexing and activating an AMC permutation mode, if said mobile station's velocity value is smaller than said first threshold, and if said mobile station occupies multiple antennas;
- means for activating (506) a beamforming algorithm and activating said AMC permutation mode, if said mobile station's velocity value is smaller than said first threshold, and if said mobile station does not occupy multiple antennas;
- means for activating (507) a RX/TX diversity algorithm and activating a PUSC permutation mode, if said mobile station's velocity value is bigger than said first threshold, and if said mobile station does not occupy multiple antennas;
- means for activating (508) said MIMO Matrix B including spatial multiplexing and activating said PUSC permutation mode, if said mobile station's velocity value is bigger than said first threshold, if said mobile station occupies multiple antennas, and if said mobile station's velocity value is smaller than a second threshold;
- means for activating (509) a MIMO Matrix A including space time block coding and activating said PUSC permutation mode, if said mobile station's velocity value is bigger than said first threshold, if said mobile station uses a, if said mobile station occupies multiple antennas, and if said mobile station's velocity value is bigger than said second threshold.

7. The base station as in claim 6 further comprises: means for calculating said channel estimation and equalization using a second algorithm, if said mobile station's velocity value is bigger than said first threshold and if said mobile station's velocity value is smaller than said second threshold, wherein said second algorithm provides more accurate channel estimation for a velocity range between said first threshold and said second threshold than said first algorithm, wherein said second threshold is bigger than said first threshold.

8. The base station as in claim 6 and 7, wherein said mobile station's velocity value is sent with an extended fast feedback channel, wherein said feedback channel is Channel Quality Indicator Channel.

9. The base station as in claim 6 and 7, wherein said mobile station's velocity value is sent with a MAC management message.

10. A computer program product stored on a computer usable medium, comprising computer readable program means for causing a computer to perform a method according to any of the preceding claims 1 to 5 when said program is run on said computer.
